# EUROPÄISCHE PATENTANMELDUNG

(11) **EP 4 553 373 A1**
(43) Veröffentlichungstag der Anmeldung: **14.05.2025**
(21) Anmeldenummer: 24211145.8
(22) Anmeldetag: 06.11.2024
(51) Int. Cl.: F21S 8/02, F21V 21/04, H02G 3/12, B23B 51/04

(54) **BEFESTIGUNGSHOHLELEMENT, SATZ UND ANORDNUNG**

(30) Priorität: 10.11.2023 AT 509082023
(71) Anmelder: H4X e.U., 8055 Graz (AT)
(72) Erfinder: HIERZER, Andreas, 8010 Graz (AT)
(74) Vertreter: Isarpatent

(57) **Zusammenfassung**

Die Erfindung betrifft ein Befestigungshohlelement (1; 1a; 1b; 1c) zur Befestigung einer elektrisch betriebenen Funktionsbaugruppe (100; 100a; 100c) in einer mit einem schallabsorbierenden Material (51) gebildeten, insbesondere platten- oder paneelartigen, Komponente (50). Das Befestigungshohlelement weist einen Aufnahmeraum (4) zur mindestens abschnittsweisen Aufnahme der Funktionsbaugruppe und eine au-ßenseitig an dem Befestigungshohlelement schraubenartig umlaufende Gewindeeinrichtung (3) aufweist, welche dafür angeordnet und ausgebildet ist, sich bei Aufbringen einer Schraubbewegung (70) auf das Befestigungshohlelement in das schallabsorbierende Material einzuarbeiten und durch Wechselwirkung der Gewindeeinrichtung mit dem schallabsorbierenden Material das Befestigungshohlelement und die Funktionsbaugruppe an der Komponente zu halten. Die Erfindung betrifft ferner einen Satz umfassend mindestens ein derartiges Befestigungshohlelement und ein Eindrehwerkzeug, sowie eine Anordnung (200; 200a; 200c) mit einer mit einem schallabsorbierenden Material (51) gebildeten Komponente (50), einem in die Komponente eingefügten derartigen Befestigungshohlelement und einer in dem Befestigungshohlelement aufgenommenen Funktionsbaugruppe.

## Beschreibung

### GEBIET DER ERFINDUNG

Die Erfindung betrifft ein Befestigungshohlelement zur Befestigung einer elektrisch betriebenen Funktionsbaugruppe, einen Satz umfassend mindestens ein derartiges Befestigungshohlelement und ein Werkzeug hierfür, sowie eine Anordnung mit einer Komponente, einem derartigen Befestigungshohlelement und einer elektrisch betriebenen Funktionsbaugruppe.

### TECHNISCHER HINTERGRUND

Es ist allgemein bekannt, elektrisch betriebene Funktionsbaugruppen wie etwa Beleuchtungseinheiten oder Lautsprechereinheiten in einer plattenartigen Komponenten, zum Beispiel einer abhängten Decke, zu montieren.

Verschiedenste Vorrichtungen zum Montieren etwa von Einbauleuchten sind bereits beschrieben worden. Beispielsweise beschreibt die DE 10 2011 051 513 A1 einen selbstschneidenden Einbauring zum Einbau einer Einbauleuchte sowie ein Werkzeug für dessen Montage.

Akustikdecken zur Beeinflussung und insbesondere Verbesserung des akustischen Verhaltens von Räumlichkeiten in Gebäuden sind als solche ebenfalls bekannt.

Es wäre wünschenswert, eine elektrisch betriebene Funktionsbaugruppe in einfacherer Weise als mit herkömmlichen Befestigungskonzepten möglich, und zugleich auch ästhetisch ansprechend, im Bereich einer Akustikdecke oder anderer mit einem schallabsorbierenden Material gebildeter Bauteile befestigen zu können.

### ZUSAMMENFASSUNG DER ERFINDUNG

Vor diesem Hintergrund liegt der Erfindung die Aufgabe zu Grunde, eine einfache, zuverlässige und bevorzugt ästhetisch ansprechende Befestigungslösung für eine Funktionsbaugruppe im Bereich einer mit einer schallabsorbierenden Material gebildeten Komponente, insbesondere einer platten- oder paneelförmigen Komponente dieser Art, anzugeben.

Diese Aufgabe wird erfindungsgemäß durch ein Befestigungshohlelement mit den Merkmalen des Anspruchs 1 und/oder durch einen Satz mit den Merkmalen des Anspruchs 11 und/oder durch eine Anordnung mit den Merkmalen des Anspruchs 13 gelöst.

Dementsprechend wird ein Befestigungshohlelement zur Befestigung einer elektrisch betriebenen Funktionsbaugruppe in einer mit einem schallabsorbierenden Material gebildeten, insbesondere platten- oder paneelartigen, Komponente vorgeschlagen. Das Befestigungshohlelement weist hierbei einen Aufnahmeraum zur mindestens abschnittsweisen Aufnahme der Funktionsbaugruppe und eine außenseitig an dem Befestigungshohlelement schraubenartig umlaufende Gewindeeinrichtung auf. Die Gewindeeinrichtung ist hierbei dafür angeordnet und ausgebildet, sich bei Aufbringen einer Schraubbewegung auf das Befestigungshohlelement in das schallabsorbierende Material einzuarbeiten und durch Wechselwirkung der Gewindeeinrichtung mit dem schallabsorbierenden Material das Befestigungshohlelement und die aufgenommene Funktionsbaugruppe an der mit dem schallabsorbierenden Material gebildeten Komponente zu halten.

Ferner wird ein Satz umfassend mindestens ein derartiges erfindungsgemäßes Befestigungshohlelement und ein Eindrehwerkzeug zum Einfügen des Befestigungshohlelements oder des Befestigungshohlelements mit einer fest mit diesem verbauten Funktionsbaugruppe in eine mit einem schallabsorbierenden Material gebildete, insbesondere platten- oder paneelartige, Komponente vorgeschlagen.

Darüber hinaus schafft die Erfindung eine Anordnung mit einer mit einem schallabsorbierenden Material gebildeten, insbesondere platten- oder paneelartigen, Komponente, insbesondere einer Akustikdeckenkomponente, einem in die Komponente eingefügten erfindungsgemäßen Befestigungshohlelement und einer in dem Befestigungshohlelement aufgenommenen, elektrisch betriebenen Funktionsbaugruppe.

Eine der Erfindung zu Grunde liegende Idee besteht darin, dass ein erfindungsgemä-ßes Befestigungshohlelement, entweder für sich oder bereits mit der Funktionsbaugruppe zu einer Einheit verbaut, in eine insbesondere relativ weiche, schallabsorbierende Komponente, wie zum Beispiel eine Akustikdecke, durch eine einfache Dreh- und Schraubbewegung eingebaut werden kann. Dies gelingt mit Hilfe der Gewindeeinrichtung, die daran angepasst ist, sich in das schallabsorbierende Material einzuarbeiten und durch ihre umlaufende Ausgestaltung vorteilhaft eine Kontaktfläche bietet, die nach dem Einschraubvorgang ein festes, zuverlässiges Halten und Fixieren des Befestigungshohlelements in dem schallabsorbierenden Material ermöglicht. Zugleich kann das Einarbeiten oder "Einschneiden" der umlaufenden Gewindeeinrichtung definiert und sauber erfolgen. Dies macht es vorteilhaft möglich, bei Bedarf das Befestigungshohlelement durch eine umgekehrte Schraubbewegung beschädigungsfrei oder zumindest beschädigungsarm wieder aus der mit dem schallabsorbierenden Material gebildeten Komponente zu entfernen. Die schraubenartig umlaufende Gewindeeinrichtung wirkt hierbei vorteilhaft mit dem schallabsorbierend ausgebildeten Material, in das es sich einarbeitet, zusammen.

Mit Hilfe der Erfindung wird die Montage der Funktionsbaugruppe in der mit dem schallabsorbierenden Material gebildeten Komponente somit ganz erheblich vereinfacht und eine komplizierte Befestigung mit einer Vielzahl von Teilen, etwa mit einzeln und gesondert zu fixierenden Schrauben und dergleichen, wird vermieden. Ein Befestigen entsprechend der Erfindung ist somit auch zeitsparend und kostengünstig.

Vorteilhafte Ausgestaltungen und Weiterbildungen der Erfindung ergeben sich aus den weiteren Unteransprüchen sowie aus der Beschreibung unter Bezugnahme auf die Figuren.

In einer Ausgestaltung ist die mit dem schallabsorbierenden Material gebildete Komponente, in der die Funktionsbaugruppe mittels des Befestigungshohlelements befestigbar ist, eine Akustikdeckenkomponente. Das Befestigungshohlelement ermöglicht somit die vorteilhaft zuverlässige, einfache und schnelle Befestigung der Funktionsbaugruppe in einer Akustikdecke, deren Material zur Schalldämmung und akustischen Verbesserung relativ weich ist.

In einer Ausgestaltung ist der Aufnahmeraum als ein axial durchgehender Hohlraum ausgebildet. Somit kann beispielsweise Wärme rückseitig gut entweichen.

In einer Ausgestaltung ist die Gewindeeinrichtung den Aufnahmeraum umgebend angeordnet. Auf diese Weise kann die aufgenommene Funktionsbaugruppe vorteilhaft besonders gut gehalten und fixiert werden.

Bei einer Weiterbildung weist das Befestigungshohlelement in dem Aufnahmeraum eine umlaufende Haltenut auf. Beispielsweise kann in einer derartigen Haltenut die Funktionsbaugruppe, zum Beispiel als eine separat bereitgestellte Funktionseinheit, mittels einer Schnapp- oder Rastverbindung durch Eingriff eines schnappenden oder rastenden Elements in die Haltenut einfach und zuverlässig gehalten werden. Zudem wird ein einfaches Lösen von dem Befestigungshohlelement bei Bedarf ermöglicht.

Bei einer anderen Weiterbildung weist das Befestigungshohlelement in dem Aufnahmeraum zwei oder mehr entlang einer Umfangsrichtung desselben verteilt angeordnete abgewinkelte Kopplungsausnehmungen auf. Mit Hilfe derartiger Kopplungsausnehmungen kann zum Beispiel eine mechanische Bajonettverbindung zwischen dem Befestigungshohlelement und einer insbesondere als separat bereitgestellte Funktionseinheit ausgebildeten Funktionsbaugruppe hergestellt werden.

In einer Weiterbildung weist das Befestigungshohlelement eine Eingriffsgeometrie für ein Eindrehwerkzeug zum Aufbringen der Schraubbewegung auf. Auf diese Weise wird das Aufbringen der Schraubbewegung erleichtert. Insbesondere gegen Ende des Einschraubvorgangs kann in Ausgestaltungen der Erfindung nur mehr ein geringer Teil des Befestigungshohlelements aus der mit dem schallabsorbierenden Material ausgebildeten Komponente hervorstehen. Mittels des Eindrehwerkzeugs wird das vollständige, bestimmungsgemäße Eindrehen oder Einschrauben, beispielsweise bis zur Bündigkeit des Befestigungshohlelements mit einer sichtseitigen Oberfläche der Komponente, oder bei einigen Varianten sogar bis zu einem gewissen, bspw. bereichsweisen, Zurückversatz hinter diese Oberfläche, ermöglicht oder zumindest erheblich vereinfacht.

In einer Ausgestaltung weist das Befestigungshohlelement in dem Aufnahmeraum eine umlaufende, unterbrochene Rippe auf, die mit in einer Umfangsrichtung des Aufnahmeraums verteilten Ausnehmungen versehen ist, wobei die Ausnehmungen die Rippe unterbrechen und vorzugsweise entlang der Umfangsrichtung des Aufnahmeraums gleichmäßig verteilt angeordnet sind. Derartige Ausnehmungen können in zweckmäßiger Weise die Eingriffsgeometrie bereitstellen.

In einer Ausgestaltung ist die Gewindeeinrichtung mit einer außenseitig an dem Befestigungshohlelement gewindeartig gewunden und durchgehend umlaufenden Rippe ausgebildet. Die Rippe kann beispielsweise derart ausgebildet sein, dass sie mehr als einen Umlauf, insbesondere mehr als zwei Umläufe, um das Befestigungshohlelement herum verläuft. Die Rippe ist insbesondere ununterbrochen ausgebildet. Eine derartige Rippe ermöglicht eine vorteilhafte Kontaktfläche mit dem schallabsorbierenden Material, um das Befestigungshohlelement sicher und fest zu fixieren.

Insbesondere kann in einer Ausgestaltung die umlaufende Rippe in einem Querschnitt derselben zu einer freien Kante der Rippe hin spitz zulaufen. Dies trägt vorteilhaft dazu bei, das Einarbeiten oder Einschneiden der Rippe in das schallabsorbierende Material zu erleichtern. Folglich wird weniger Kraft für das Einschrauben des Befestigungshohlelements benötigt, somit auch weniger Kraft auf die mit dem schallabsorbierenden Material gebildete Komponente aufgebracht, und ein Beschädigen, Ausfransen usw. vermieden.

In einer Ausgestaltung ist das Befestigungshohlelement mit einer im Wesentlichen kreiszylinderförmigen äußeren Grundform ausgebildet. Eine derartige Ausbildung kann mit Blick auf die Ausführung der Schraubbewegung und einen hinreichenden Platz zur Aufnahme der Funktionsbaugruppe in dem Befestigungshohlelement vorteilhaft sein.

In einer bevorzugten Ausgestaltung ist das Befestigungshohlelement einstückig ausgebildet. Ein derartiges Befestigungshohlelement ist einfach und zweckmäßig handhabbar.

In einer Ausgestaltung kann das Befestigungshohlelement in einem generativen Fertigungsverfahren, insbesondere mittels 3D-Druck, hergestellt sein. Auf diese Weise kann das Befestigungshohlelement auch mit komplexeren geometrischen Merkmalen ausgestattet werden und/oder in kleinerer Serie wirtschaftlich hergestellt werden. In einer alternativen Ausgestaltung kann das Befestigungshohlelement gegossen, etwa spritz- oder druckgegossen sein, was insbesondere für größere Stückzahlen wirtschaftlich sein kann.

Insbesondere kann das Befestigungshohlelement aus einem Kunststoffmaterial oder einem Metallmaterial, insbesondere Aluminium oder einer Aluminiumlegierung, hergestellt sein. Ein Kunststoffmaterial ist relativ leicht und kann kostengünstig sein, während ein Metallmaterial ein noch robusteres Befestigungshohlelement ermöglichen kann.

In einer Ausgestaltung ist das Befestigungshohlelement zur lösbaren Aufnahme einer Funktionseinheit als der Funktionsbaugruppe ausgebildet. Ein derartiges Befestigungshohlelement ist somit eine Montageeinrichtung (im Englischen auch als "mounting set" bezeichnet), die zunächst montiert und in die die separat bereitgestellte Funktionseinheit dann eingefügt wird. Vorteilhaft kann hierbei die Funktionseinheit, wie beispielsweise eine Leuchteinheit oder eine Sensoreinheit oder eine Lautsprechereinheit, bei Bedarf, etwa bei Beschädigung, zu Reinigungszwecken bei Verschmutzung usw. leicht entnommen oder ausgetauscht werden.

Bei einer anderen Ausgestaltung ist das Befestigungshohlelement als ein Gehäuseelement ausgebildet und dafür vorgesehen, die Funktionsbaugruppe in dem Aufnahmeraum fest verbaut aufzunehmen. Bei dieser Ausgestaltung bilden somit die Funktionsbaugruppe und das Befestigungshohlelement eine zusammengehörige, vormontierte Einheit, die als Ganzes in der mit dem schallabsorbierenden Material gebildeten Komponente montiert werden kann.

In einer Weiterbildung weist das Befestigungshohlelement ferner eine Materialtrenneinrichtung auf und ist mittels des Aufbringens der Schraubbewegung unter Bildung eines entfernbaren Kerns des schallabsorbierenden Materials durch Wirkung der Materialtrenneinrichtung in das volle schallabsorbierende Material einfügbar. Diese Ausgestaltung ermöglicht die Befestigung in der mit dem schallabsorbierenden Material gebildeten Komponente ohne die vorherige Erstellung einer Öffnung, etwa eines runden Lochs, in der Komponente, zum Beispiel durch Ausschneiden. Die Befestigung erfolgt bei dieser Ausgestaltung stattdessen in einem Schritt in das Vollmaterial.

In anderen vorteilhaften und nützlichen Ausgestaltungen des Befestigungshohlelements kann die Materialtrenneinrichtung weggelassen sein. Insbesondere wird bei derartigen Ausgestaltungen eine Aussparung, etwa ein Loch, zur Aufnahme des Befestigungshohlelements in der Komponente in einem separaten Schritt vorab erzeugt, zum Beispiel ausgeschnitten oder ausgesägt.

In einer Ausgestaltung ist die Materialtrenneinrichtung den Aufnahmeraum umgebend angeordnet. Auf diese Weise kann der Kern derart herausgetrennt werden, dass eine Öffnung oder ein Loch passender Größe für ein Aufnehmen des Befestigungshohlelements entsteht.

Bei einer Weiterbildung ist die Materialtrenneinrichtung an einem stirnseitigen Rand einer umlaufenden Wandung des Befestigungshohlelements angeordnet. Somit kann die Materialtrenneinrichtung ihre Wirkung besonders gut und bereits beim Ansetzen des Befestigungshohlelements an eine Oberfläche der Komponente entfalten.

In einer Ausgestaltung weist die Materialtrenneinrichtung eine umlaufende Anordnung von Zähnen, insbesondere Sägezähnen, auf. Derartige Zähne ermöglichen eine wirkungsvolle Materialtrennung und effektive Bildung des Kerns.

Gemäß einer Weiterbildung setzen die Zähne radial außenseitig einen im Wesentlichen zylindrischen Außenumfangsflächenbereich des Befestigungshohlelements abschnittsweise fort und bilden radial innenseitig abschnittsweise Bereiche einer trichterartig zulaufenden Fläche, derart, dass die Zähne jeweils an einem Zahnfuß derselben im Wesentlichen eine Außenwanddicke des Befestigungshohlelements erreichen. Derart ausgebildete Zähne ermöglichen eine präzise Heraustrennung des Kerns aus dem Material und eine sauber gearbeitete Öffnung. In die saubere innere Trennfläche der Öffnung kann sich anschließend die Gewindeeinrichtung problemlos einarbeiten.

In einer Weiterbildung sind die Materialtrenneinrichtung und die Gewindeeinrichtung entlang einer Drehachse, durch Drehen um welche das Befestigungshohlelement in das volle schallabsorbierende Material einschraubbar ist, voneinander beabstandet an dem Befestigungshohlelement vorgesehen. Somit kann eine gute Führung des Befestigungshohlelements erreicht werden, bevor die Gewindeeinrichtung zur Wirkung kommt.

In einer Ausgestaltung ist das Befestigungshohlelement mit einem in eine sichtseitige Oberfläche der mit dem schallabsorbierenden Material ausgebildeten Komponente versenkbaren, kegeligen Endabschnitt ausgebildet. Auf diese Weise kann das Befestigungselement beispielsweise bündig zu oder mit einem geringen Rückversatz gegenüber einer sichtseitigen Oberfläche der mit dem schallabsorbierenden Material ausgebildeten Komponente in diese eingefügt werden.

Bei einer Weiterbildung ist das Befestigungshohlelement an einer sichtseitigen Stirnseite desselben glatt ausgebildet. Dies ermöglicht eine Befestigung mit einem optisch sauberen, ansprechenden und zu der mit dem schallabsorbierenden Material gebildeten Komponente bündigen Rand, der die Funktionsbaugruppe beispielsweise umgibt.

Bei einer anderen Weiterbildung weist das Befestigungshohlelement an einer sichtseitigen Stirnseite desselben eine sichtseitige Rippen-Rillen-Struktur auf. Eine derarige Rippen-Rillen-Struktur kann ein zumindest bereichsweises Überspachteln der Stirnseite des Befestigungshohlelements und nachfolgendes Überstreichen erleichtern. Beispielsweise kann die Haftung des Spachtels an der Stirnseite durch die Rippen und Rillen verbessert werden.

In einer Ausgestaltung ist das Eindrehwerkzeug mit Armen ausgebildet, die derart angeordnet sind, dass die Arme bei einer Verwendung des Eindrehwerkzeugs zum Einfügen des Befestigungshohlelements oder des Befestigungshohlelements mit der fest verbauten Funktionsbaugruppe mittels einer Schraubbewegung sichtseitig an dem Befestigungshohlelement anstehen und über einen sichtseitigen Außenrand des Befestigungshohlelements außenseitig überstehen. Auf diese Weise kann ein zu weites Eindrehen des Befestigungshohlelements verhindert werden.

In einer Ausgestaltung ist die Funktionsbaugruppe als eine Beleuchtungsbaugruppe ausgebildet.

Bei anderen Ausgestaltungen kann die Funktionsbaugruppe als eine Sensorbaugruppe oder als eine Lautsprecherbaugruppe ausgebildet sein.

In einer Ausgestaltung ist die Funktionsbaugruppe als eine lösbar in dem Befestigungshohlelement aufgenommene Funktionseinheit ausgebildet, beispielsweise als eine Leuchteinheit oder Sensoreinheit oder Lautsprechereinheit.

In einer Ausgestaltung ist die Funktionseinheit mittels an der Funktionseinheit außenseitig angeordneter Kugelschnappereinrichtungen in dem Befestigungshohlelement rastend gehalten.

In einer anderen Ausgestaltung ist die Funktionseinheit bajonettartig mit dem Befestigungshohlelement gekoppelt.

Bei einer anderen Ausgestaltung ist die Funktionsbaugruppe fest mit dem Befestigungshohlelement als Gehäuseelement verbaut. Insbesondere kann hierbei das Befestigungshohlelement zusammen mit der Funktionsbaugruppe eine Einheit bilden, etwa eine Leuchte, ein Sensormodul oder ein Lautsprechermodul.

Bei einer Ausgestaltung ist das schallabsorbierende Material mit einem faserigen oder porösen Material ausgebildet. Derartige Materialien können gute Schalldämmungseigenschaften aufweisen.

In Weiterbildungen kann das schallabsorbierende Material mit einem Glaswollematerial, einem Glasfasermaterial, einem Mineralwollematerial, einem filzartigen Material, einem Schaummaterial oder einem Gewebe ausgebildet sein.

Insbesondere kann das schallabsorbierende Material eine geringere Härte besitzen als ein Material der Gewindeeinrichtung des Befestigungshohlelements.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die Erfindung wird nachfolgend anhand der in den Figuren der Zeichnungen angegebenen Ausführungsbeispiele näher erläutert. Es zeigen hierbei:
- Fig. 1, 2: perspektivische Darstellungen eines Befestigungshohlelements gemäß einem ersten Ausführungsbeispiel;
- Fig. 3A-3D: in perspektivischer sichtseitiger Ansicht Schritte eines Einfügens des Befestigungshohlelements der Fig. 1 und 2 in eine mit einem schallabsorbierenden Material gebildete plattenförmige Komponente durch Einschrauben in diese mit Hilfe eines Eindrehwerkzeugs;
- Fig. 4: das in die mit dem schallabsorbierenden Material gebildete Komponente fertig eingefügte Befestigungshohlelement der Fig. 1 und 2, perspektivisch und ausgebrochen gezeigt;
- Fig. 5: die Konfiguration der Fig. 4 in einem Mittelschnitt;
- Fig. 6: ein Zusammenwirken des Eindrehwerkzeugs mit dem Befestigungshohlelement, wie in Fig. 3A-3D, in einer stirnseitigen Ansicht;
- Fig. 7: ein Detail (D) aus Fig. 6;
- Fig. 8A: ein Einfügen einer als Leuchteinheit ausgebildeten Funktionseinheit in das fertig eingeschraubte Befestigungshohlelement, gemäß dem ersten Ausführungsbeispiel;
- Fig. 8B: eine Beleuchtungsanordnung mit dem fertig eingeschraubten Befestigungshohlelement der Fig. 1 und 2 und deren gemäß Fig. 8B eingesetzter Funktionseinheit;
- Fig. 9: das Befestigungshohlelement der Fig. 1, 2 mit der gemäß Fig. 8B eingesetzten Funktionseinheit, ohne die mit dem schallabsorbierenden Material gebildete Komponente, in perspektivischer ausgebrochener Ansicht;
- Fig. 10: ein Befestigungshohlelement und eine in diese eingesetzte Funktionseinheit gemäß einem zweiten Ausführungsbeispiel, in einem Längsmittelschnitt;
- Fig. 11: das Befestigungshohlelement der Fig. 10 in dem Längsmittelschnitt;
- Fig. 12: das Befestigungshohlelement und die Funktionseinheit gemäß dem zweiten Ausführungsbeispiel, während des Einsetzens der Funktionseinheit in das Befestigungshohlelement, in perspektivisch gezeigter, längs geschnittener Darstellung;
- Fig. 13: ein in eine mit einem schallabsorbierenden Material gebildete Komponente eingefügtes Befestigungshohlelement gemäß einem dritten Ausführungsbeispiel, mittig geschnitten und perspektivisch, während eines Verspachtelns;
- Fig. 14: eine Detailansicht der Situation aus Fig. 13;
- Fig. 15: eine Leuchte, die mit einer Leuchtbaugruppe als Funktionsbaugruppe sowie mit einem mit dieser fest verbauten Befestigungshohlelement als Gehäuseelement gebildet ist, gemäß einem vierten Ausführungsbeispiel, in einem Längsmittelschnitt; und
- Fig. 16: die Leuchte der Fig. 15, mittig geschnitten und perspektivisch.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren sind gleiche, funktionsgleiche und gleich wirkende Elemente, Merkmale und Komponenten - sofern nichts anderes angegeben ist - jeweils mit denselben Bezugszeichen versehen.

### BESCHREIBUNG VON AUSFÜHRUNGSBEISPIELEN

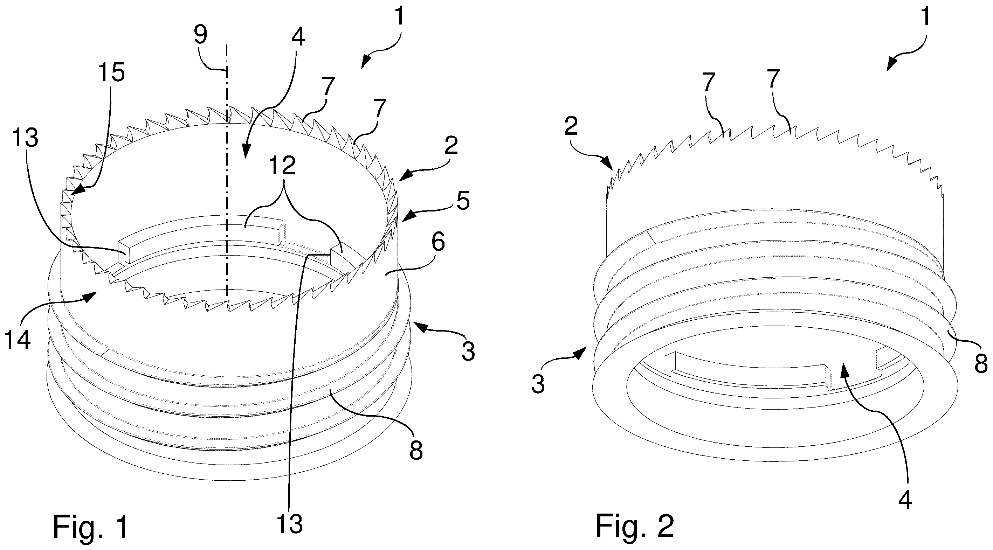

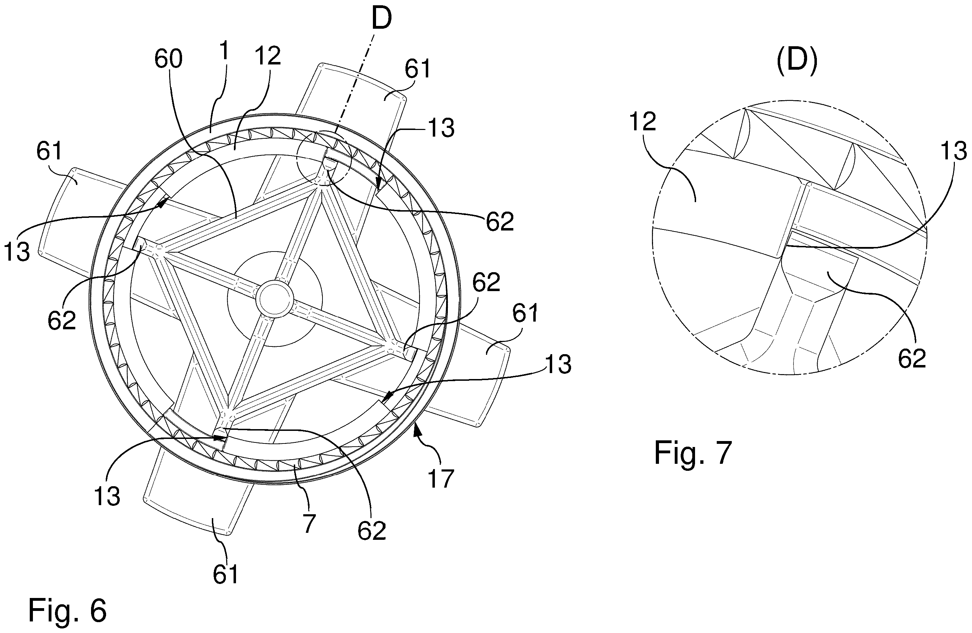

Fig. 1-9 illustrieren ein Befestigungshohlelement 1, ausgebildet als ein so genanntes "mounting set" zur Befestigung einer elektrisch betriebenen, in Fig. 1-2 nicht gezeigten, als Funktionseinheit ausgebildeten Funktionsbaugruppe 100, beispielsweise einer Leuchteinheit, sowie die Einbringung und Wirkungsweise des Befestigungshohlelements 1. Die Funktionsbaugruppe 100 kann statt als eine Leuchteinheit als eine Sensoreinheit oder eine Lautsprechereinheit ausgebildet sein.

Das Befestigungshohlelement 1 ist dafür ausgebildet, in eine mit einem schallabsorbierenden Material 51 gebildete, platten- oder paneelartige Komponente 50 einer Akustikdecke eingefügt zu werden, um die Funktionsbaugruppe 100 in der Komponente 50 zu befestigen.

Das Befestigungshohlelement 1 ist einstückig und mit einer im Wesentlichen kreiszylinderförmigen äußeren Grundform ausgebildet. Beispielsweise kann das Befestigungshohlelement 1 mittels 3D-Druck generativ erzeugt werden oder bei einigen Varianten stattdessen, beispielsweise bei größeren Stückzahlen, spritz- oder druckgegossen werden. Das Befestigungshohlelement 1 ist zum Beispiel aus einem Kunststoffmaterial oder einem Metallmaterial, insbesondere Aluminium oder einer Aluminiumlegierung, hergestellt.

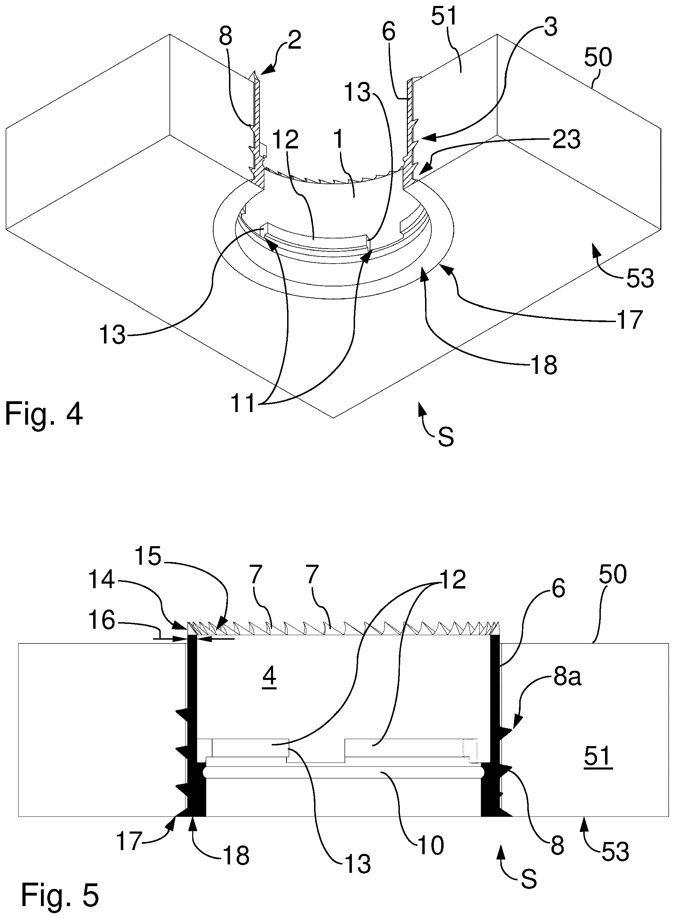

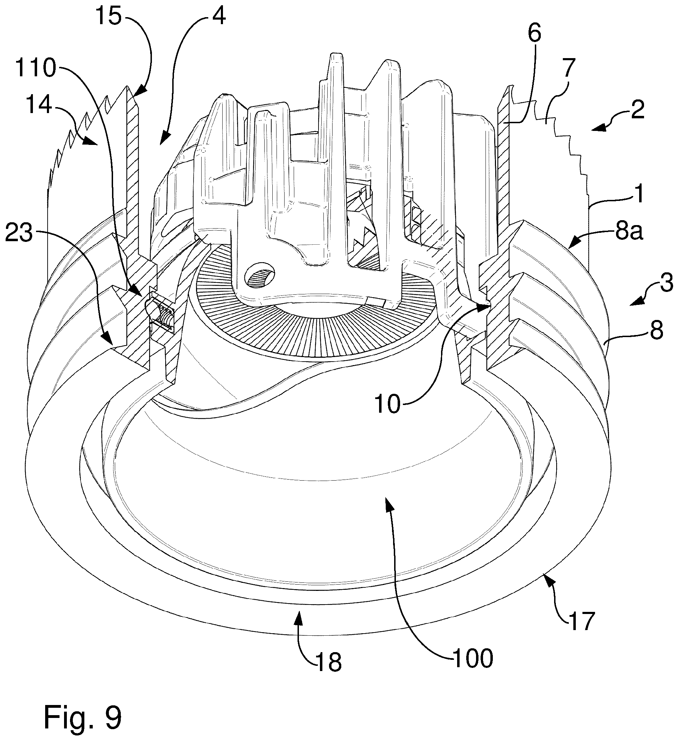

Das Befestigungshohlelement 1 ist mit einer im Wesentlichen hohlzylindrischen, umlaufenden Wandung 6 ausgebildet. Außenseitig an der Wandung 6 läuft in einem Bereich, der etwas mehr als eine Hälfte einer axialen Erstreckung des Befestigungshohlelements 1 einnimmt, eine Gewindeeinrichtung 3 um das Befestigungshohlelement 1 schraubenartig um. Hierbei ist die Gewindeeinrichtung 3 mit einer Rippe 8 ausgebildet, die ausgehend von einer radial äußeren Seite der Wandung 6 zunächst ansteigt und sich mehr als zwei Umläufe gewindeartig um das Befestigungshohlelement 1 windet. Die Rippe 8 erstreckt sich hierbei ununterbrochen und durchgehend um das Befestigungshohlelement 1 außenseitig herum. In einem Querschnitt der Rippe 8, siehe bspw. Fig. 5 und 9, läuft die Rippe 8 radial in einer spitzen, eckig ausgebildeten freien Kante 8a aus.

Das Befestigungshohlelement 1 weist ferner eine Materialtrenneinrichtung 2 auf, die an einem stirnseitigen Rand 5 der Wandung 6 angeordnet und mit einer umlaufenden Anordnung von als Sägezähne geformten Zähnen 7 ausgebildet ist. Radial außenseitig setzen die Zähne 7 einen im Wesentlichen zylindrischen Außenumfangsflächenbereich 14 des Befestigungshohlelements 1 jeweils abschnittsweise fort. Innenseitig hingegen, siehe zum Beispiel Fig. 5, 9, bilden Oberflächenabschnitte der Zähne 7 Bereiche einer trichterartig zulaufenden Fläche 15. Die Zähne 7 erreichen hierbei jeweils an ihrem Zahnfuß im Wesentlichen eine Außenwanddicke 16 des Befestigungshohlelements 1, siehe Fig. 5.

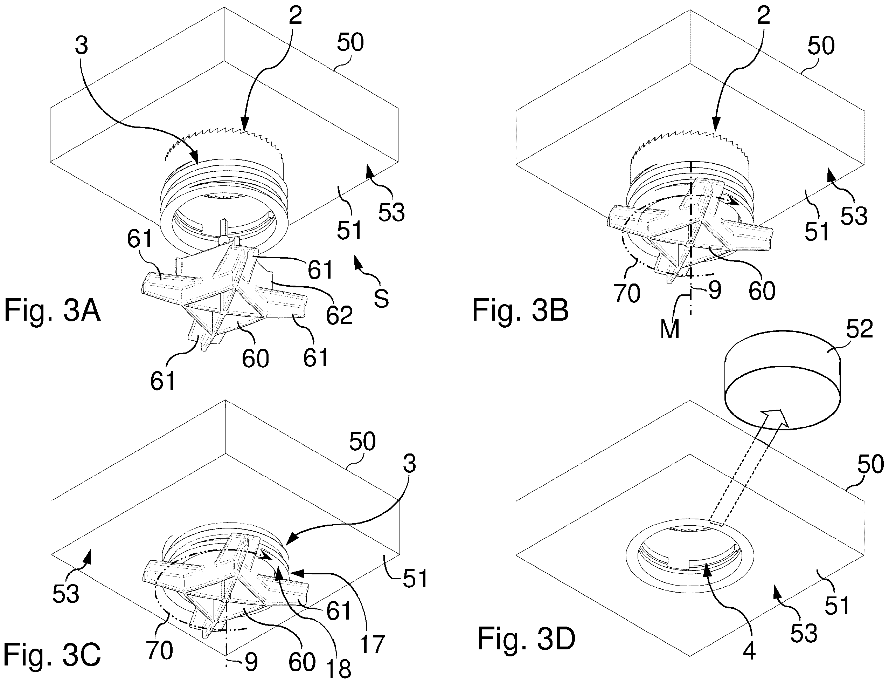

Entlang einer Achse 9, die eine nachfolgend noch näher erläuterte Drehachse 9 bildet, siehe etwa Fig. 1 und 3C, sind die Materialtrenneinrichtung 2 und die Gewindeeinrichtung 3 voneinander beabstandet.

Axial durch das Befestigungshohlelement 1 erstreckt sich ein durchgehender Hohlraum, der einen Aufnahmeraum 4 für die Funktionsbaugruppe 100 bildet. Die Funktionsbaugruppe 100 kann mindestens abschnittsweise, bei dem ersten Ausführungsbeispiel insbesondere im Wesentlichen vollständig, siehe Fig. 9, in dem Aufnahmeraum 4 aufgenommen und untergebracht werden.

Die Gewindeeinrichtung 3 und die Materialtrenneinrichtung 2 umgeben entlang einer Umfangsrichtung des Befestigungshohlelements 1 den Aufnahmeraum 4.

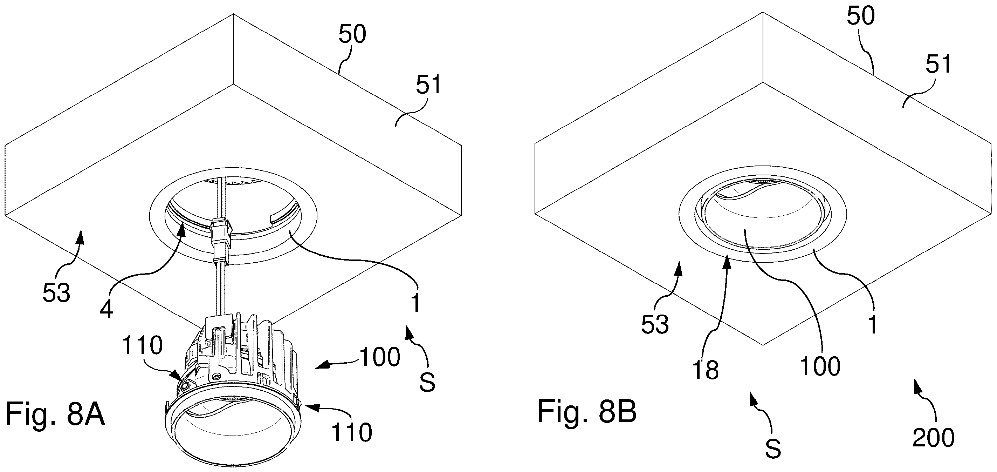

In dem Aufnahmeraum 4 ist eine um diesen umlaufende Haltenut 10 vorgesehen, in die an der Funktionseinheit 100 außenseitig angeordnete Kugelschnappereinrichtungen 110 mit federbelasteten Kugeln einrasten können, um die Funktionseinheit 100 in dem Aufnahmeraum 4 lösbar zu halten, siehe bspw. Fig. 8A und 9.

Eine Akustikdecke ist ein Deckensystem, das dafür ausgebildet ist, die akustische Qualität in einer Räumlichkeit zu verbessern. Hierzu kann die Akustikdecke durch Absorption von Schallwellen das Geräuschniveau vermindern.

Die platten- oder paneelartige Akustikdeckenkomponente 50 ist hierbei aus einem relativ weichen, schallabsorbierenden Material 51 ausgebildet und ermöglicht auf diese Weise, die akustischen Eigenschaften des Raums zu verbessern. Das Material 51 weist Eigenschaften auf, die eine Schalldämmung und Akustikverbesserung fördern. Beispielsweise ist das Material 51 ein faseriges oder poröses Material oder beinhaltet ein solches. Zum Beispiel kann das Material 51 mit Glasfasern oder Glaswolle, mit Mineralwolle, mit einem Filz, mit einem Schaum oder mit einem Gewebe, oder einer Kombination derartiger Materialien, ausgebildet sein. Das Material 51 ist hierbei deutlich weicher als das Material des Befestigungshohlelements 1 und insbesondere der Gewindeeinrichtung 3. Ferner kann das Material 51 weicher als beispielsweise eine Gipskartonplatte einer gewöhnlichen Zwischendecke sein. Zugleich ist das Material 51 hinreichend formstabil, um Platten oder Paneele daraus herzustellen.

Herkömmliche Gipskartonplatten weisen keine wesentlichen inhärenten Schalldämmungseigenschaften auf, können in einigen Fällen Schall reflektieren oder sogar verstärken und leisten somit keinen signifikanten Betrag zu einer Akustikverbesserung, anders als die Komponente 50 der Akustikdecke.

Das Befestigungshohlelement 1 kann zum Einfügen desselben in die Komponente 50 in diese durch eine Drehbewegung 70 um die Drehachse 9, welche einer Längsmittelachse des Befestigungshohlelements 1 entspricht, in das volle schallabsorbierende Material 51 eingeschraubt werden. Fig. 3A, 3B, 3C, 3D zeigen aufeinanderfolgende Zustände während eines derartigen Einschraub- oder Eindrehvorgangs. Das Befestigungshohlelement 1 wird an eine sichtseitige Oberfläche 53 der Komponente 50 an einer beliebigen, gewünschten Stelle angesetzt, siehe Fig. 3A, und schneidet sich mittels der Materialtrenneinrichtung 2 in die Oberfläche 53 ein, siehe Fig. 3B. Nach hinreichendem Einschneiden in das Material 51 gelangt die Gewindeeinrichtung 3 in Eingriff mit dem Material 51 und arbeitet sich hierbei in dieses ein, siehe Fig. 3C, bis das Befestigungshohlelement 1 an einer sichtseitigen Stirnseite 18 bündig mit der Oberfläche 53 ist. In den Figuren ist eine Sichtseite mit dem Bezugszeichen S bezeichnet.

Bei dem Eindrehen bis zur Bündigkeit mit der Oberfläche 53 wird ein kegeliger Endabschnitt 23, an dem ein stirnseitiger Außenrand 17 ausgebildet ist, in das Material 51 versenkt, siehe bspw. Fig. 4. Der Endabschnitt 23 weist im Bereich der sichtseitigen Stirnseite 18 eine ebene Oberfläche auf, die dann bündig in die Oberfläche 53 übergeht und einen sauberen Randabschluss bildet.

Durch Wechselwirkung der ununterbrochen umlaufenden Gewindeeinrichtung 3 mit dem schallabsorbierenden Material 51 ist das Befestigungshohlelement 1 sicher an der Akustikdeckenkomponente 50 fixiert. Nach Einsetzen der Funktionsbaugruppe 100 in den Aufnahmeraum 4 ist auch diese zuverlässig an der Komponente 50 gehalten. Die Rippe 8 bietet mit ihrer ununterbrochenen Gestaltung und mehr als zweimaligen Umwindung der Wandung 6 eine große Kontaktfläche mit dem relativ weichen Material 51 und somit eine gute Haltewirkung. Ein Entfernen des Befestigungshohlelements 1 ist beschädigungsfrei oder zumindest beschädigungsarm durch Herausschrauben bei Bedarf möglich.

Bei dem ersten Ausführungsbeispiel wird das Befestigungshohlelement 1 in das volle schallabsorbierende Material 51 eingeschraubt, wobei ein Kern 52 gebildet wird, der von einer Oberseite der Komponente 50 entnommen und entfernt werden kann. Hierbei muss somit vor dem Einfügen des Befestigungshohlelements 1 kein Loch für dieses vorgeschnitten werden.

Eine fertiggestellte Anordnung 200 gemäß dem ersten Ausführungsbeispiel mit der Akustikdeckenkomponente 50, dem in diese eingefügten Befestigungshohlelement 1 und der in dem Befestigungshohlelement 1 lösbar gehaltenen, als Leuchteinheit ausgebildeten Funktionsbaugruppe 100 zeigt Fig. 8B.

Das Befestigungshohlelement 1 weist in dem Aufnahmeraum 4 eine in Umfangsrichtung an einer Innenseite der Wandung 6 umlaufende, unterbrochene Rippe 12 auf, die mit in der Umfangsrichtung des Aufnahmeraums 4 gleichmäßig verteilten Ausnehmungen 13 versehen ist. Die Ausnehmungen 13 unterbrechen jeweils die Rippe 12 und dienen als eine Eingriffsgeometrie 11 für ein Eindrehwerkzeug 60 zum Aufbringen der Schraubbewegung 70.

Das Eindrehwerkzeug 60 weist vier Arme 61 auf, die um eine Mittelachse M des Werkzeugs 60 gleichmäßig verteilt in Abständen von 90 Grad angeordnet sind. Im Gebrauchszustand entspricht die Mittelachse M des Eindrehwerkzeugs 60 der Drehachse 9. An der Winkelposition jedes der Arme 61 ist eine von vier Eingriffsrippen 62 angeordnet, die sich im Wesentlichen längs an dem Werkzeug 60, im Wesentlichen parallel zur Mittelachse M, erstrecken. Eine Erstreckung der Arme 61 radial zur Achse M ist größer als jene der Rippen 62.

Die Eingriffsrippen 62 sind jeweils in eine der Ausnehmungen 13 einführbar, derart, dass sie am eine Rand der Ausnehmung 13 jeweils anstehen. Zum Einfügung des Befestigungshohlelements 1 kann dieses somit mittels des Werkzeugs 60 eingeschraubt werden, wie durch Bezugszeichen 70 illustriert, bis Bündigkeit des Befestigungshohlelements 1 mit der Oberfläche 53 hergestellt ist. Die Arme 61 bieten hierbei eine gute Handhabung für die Monteursperson.

Zugleich sind die Arme 61 derart ausgebildet und angeordnet, dass sie bei der Verwendung des Eindrehwerkzeugs 60 zum Einfügen des Befestigungshohlelements 1 mittels der Schraubbewegung 70 sichtseitig an dem Befestigungshohlelement 1, also an dessen sichtseitiger Stirnseite 18, anstehen und über den sichtseitigen Außenrand 17 des Befestigungshohlelements 1 gleichzeitig außenseitig überstehen. Somit kann das Befestigungshohlelement 1 nur bis zur Bündigkeit mit der Oberfläche 53 der Komponente 50 eingedreht werden. Eine reproduzierbare, saubere Montage wird somit möglich. Im Gebrauch des Werkzeugs 60 zu dem Befestigungshohlelement 1 gewandte Oberseitenbereiche der Arme 61 bilden vorzugsweise Teil einer gemeinsamen Ebene normal zur Mittelachse M.

Erwähnt sei auch, dass die außenseitige Rippe 8 an beiden Endbereichen der Gewindeeinrichtung 3 von der zylindrischen Außenseite der Wandung 6, im Sinne der radialen Abmessung der Rippe 8, ansteigt bzw. wieder abfällt. Fig. 9 beispielsweise zeigt den Anstieg in dem zur Materialtrenneinrichtung 2 gewandten Endbereich der Gewindeeinrichtung 3 sowie das Abfallen der radialen Höhe der Rippe 8 in dem zu dem kegeligen Endabschnitt 23 gewandten Endbereich. Dies ermöglicht zunächst ein sauberes Einarbeiten in das Material 51 und abschließend ein sauberes Einsenken des Endabschnitts 23 in die Oberfläche 53.

Gemäß dem ersten Ausführungsbeispiel ist somit auch ein Befestigungssatz für die als Leuchteinheit ausgebildete Funktionsbaugruppe 100 vorgesehen, der das Befestigungshohlelement 1 und das Werkzeug 60 beinhaltet.

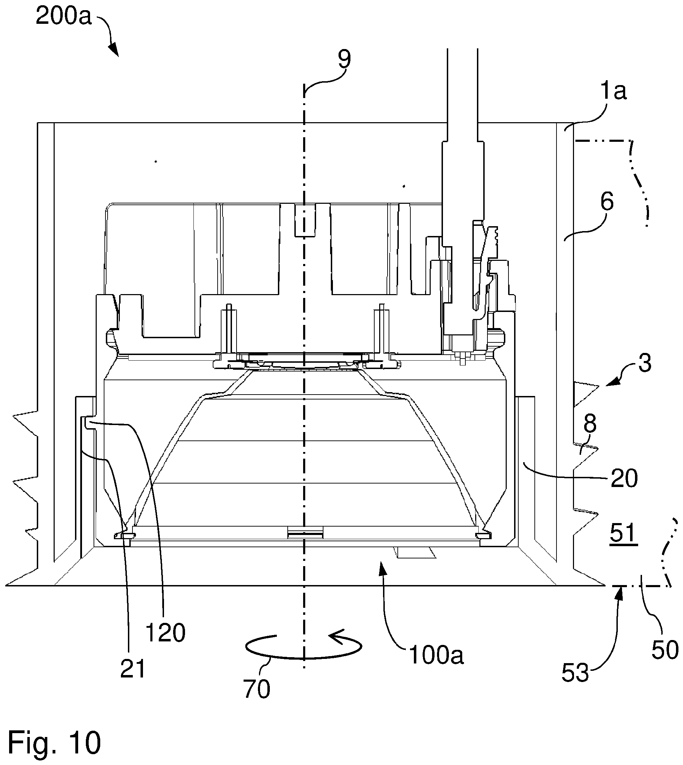

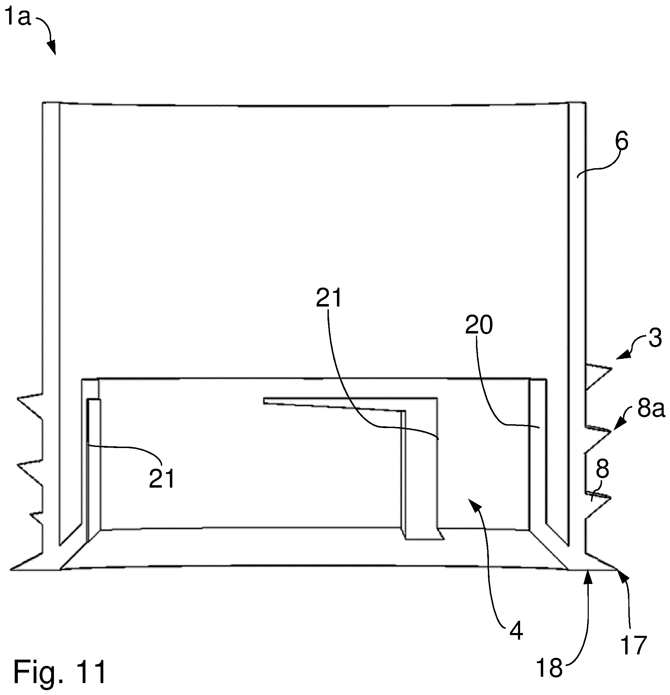

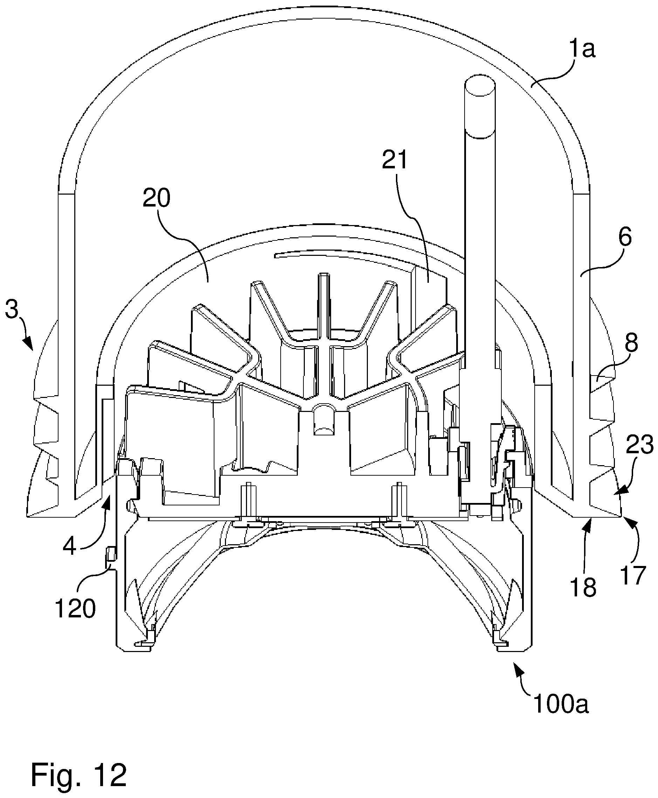

Ein Befestigungshohlelement 1a gemäß einem zweiten Ausführungsbeispiel zeigen die Fig. 10-12, wobei nachfolgend vor allem dessen Unterschiede gegenüber dem ersten Ausführungsbeispiel beschrieben werden.

Die Gewindeeinrichtung 3 ist bei dem Befestigungshohlelement 1a wie bei dem ersten Ausführungsbeispiel ausgebildet, die Materialtrenneinrichtung 2 ist jedoch bei dem zweiten Ausführungsbeispiel weggelassen. Daher wird, um das Befestigungshohlelement 1a in die Akustikdeckenkomponente 50 einzufügen, zunächst ein rundes Loch in die Komponente 50 eingeschnitten, zum Beispiel mittels einer Lochsäge, einer Stichsäge oder ähnlich. Danach wird das Befestigungshohlelement 1a analog dem Vorgehen bei dem ersten Ausführungsbeispiel in das bereits vorhandene, da vorgeschnittene, Loch in der Komponente 50 eingeschraubt.

Ferner unterscheidet sich das Befestigungshohlelement 1a von dem Befestigungshohlelement 1 darin, dass statt der umlaufenden Haltenut 10 bei dem Befestigungshohlelement 1a mehrere, beispielsweise drei, gleichmäßig in Umfangsrichtung des Befestigungshohlelements 1a verteilt angeordnet, abgewinkelte Kopplungsausnehmungen 21 in dem Aufnahmeraum 4 vorgesehen sind. Diese sind beispielhaft als flache Nuten in eine Innenseite einer inneren umlaufenden Wandung 20, die sich parallel und koaxial zu der Wandung 6 erstreckt, jedoch erheblich kürzer ist als jene, eingebracht.

In dem Aufnahmeraum 4 des Befestigungshohlelements 1a kann eine Funktionsbaugruppe 100a aufgenommen werden, die wiederum beispielhaft als eine Leuchteinheit ausgebildet ist oder stattdessen als eine Sensoreinheit oder eine Lautsprechereinheit ausgebildet sein kann.

Die Funktionsbaugruppe 100a weist radial nach außen weisende Vorsprünge 120 auf, die jeweils in eine der Ausnehmungen 21 eingreifen können. Auf diese Weise kann die Funktionseinheit 100a bajonettartig mit dem Befestigungshohlelement 1a verbunden werden. Fig. 10 zeigt eine Anordnung 200a mit der Akustikdeckenkomponente 50, dem in diese eingedrehten Befestigungshohlelement 1a und der als eine Leuchteinheit ausgebildeten Funktionsbaugruppe 100a.

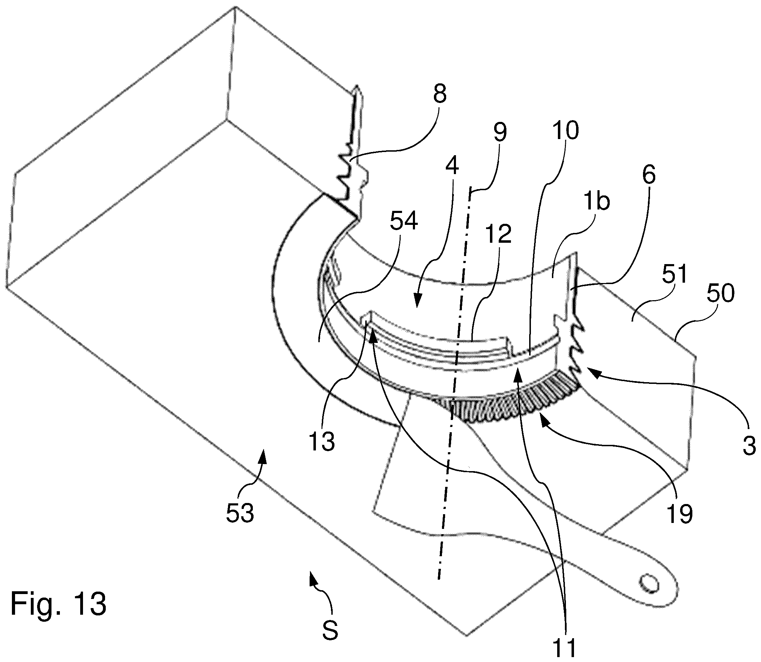

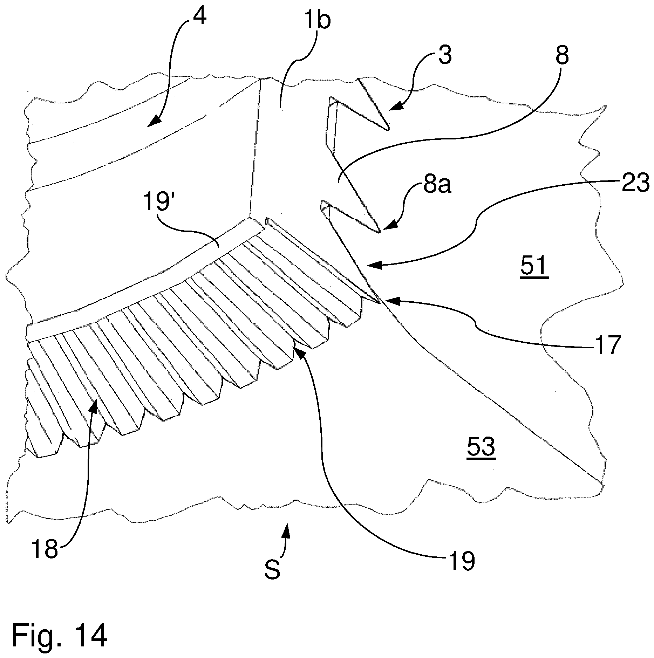

Ein Befestigungshohlelement 1b gemäß einem dritten Ausführungsbeispiel illustrieren die Fig. 13 und 14. Das Befestigungshohlelement 1b ist, mit Ausnahme der Gestaltung desselben im Bereich dessen sichtseitiger Stirnseite 18 und das Fehlen der Materialtrenneinrichtung 2, wie das Befestigungshohlelement 1 ausgebildet, mittels des Werkzeugs 60 in die Akustikdeckenkomponente 50 einschraubbar, und kann die Funktionsbaugruppe 100 aufnehmen.

Bei dem Befestigungshohlelement 1b ist die sichtseitige Stirnseite 18, siehe Fig. 14, nicht wie bei dem ersten und zweiten Ausführungsbeispiel glatt, sondern stattdessen mit einer stirnseitigen Rippen-Rillen-Struktur 19 ausgebildet. Die Rippen-Rillen-Struktur 19 weist abwechselnd Rippen und Rillen auf, die sich im Wesentlichen radial zu der Drehachse 9, somit der Längsmittelachse des Befestigungshohlelements 1b, erstrecken. Radial innen, zu dem Aufnahmeraum 4 hin, ist die Rippen-Rillen-Struktur 19 durch einen umlaufenden Begrenzungsvorsprung 19' abgeschlossen, der über die Rippen der Rippen-Rillen-Struktur 19 in axialer Richtung des Befestigungshohlelements 1b übersteht. An dem Begrenzungsvorsprung 19' kann, wie bei dem ersten Ausführungsbeispiel, jeder der Arme 61 anstehen. Dies ermöglicht es, bei dem Eindrehvorgang beispielsweise ein stirnseitige Ringfläche des Begrenzungsvorsprungs 19' im Wesentlichen bündig mit der sichtseitigen Oberfläche 53 der Akustikdeckenkomponente 50 anzuordnen. Durch den Rückversatz der Rippen-Rillen-Struktur 19 entsteht ein flacher Bereich, der durch für Akustikdecken geeignete Spachtelmasse 54 aufgefüllt werden kann, siehe Fig. 13. Durch das Überspachteln und anschließendes Überstreichen kann das Befestigungshohlelement 1b besonders dezent und unauffällig, quasi randlos, installiert werden. Die Rippen und Rillen ermöglichen ein gutes Anhaften der Spachtelmasse 54.

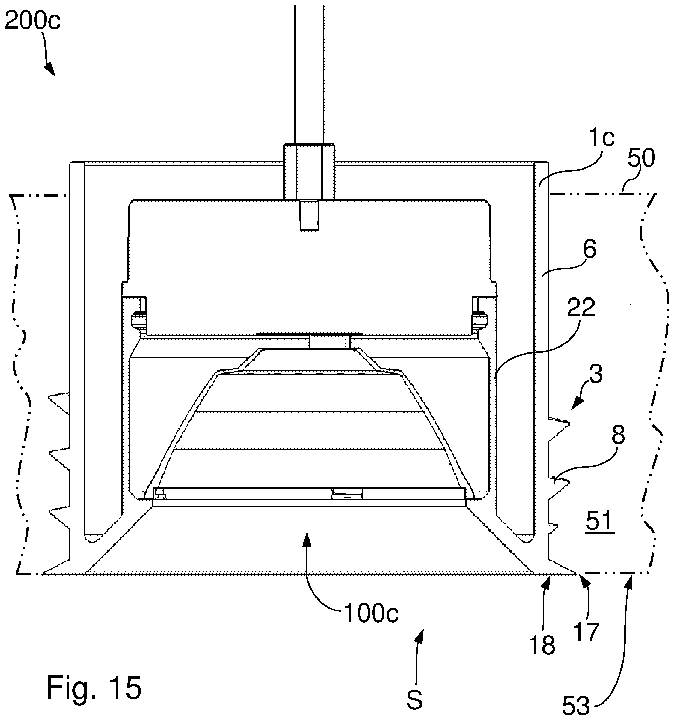

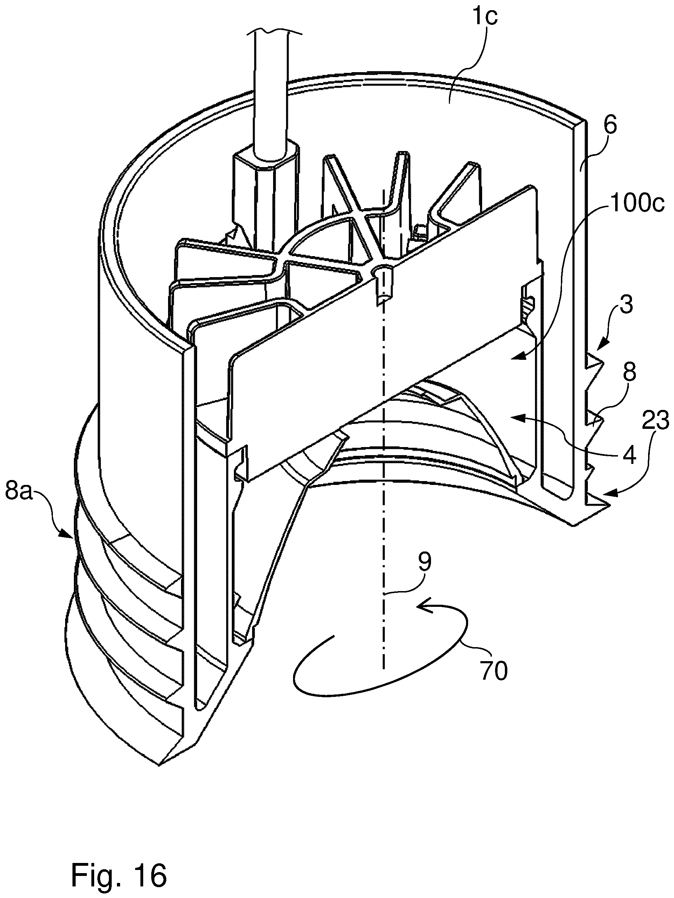

Ein Befestigungshohlelement 1c, und eine beispielhafte Leuchte als eine Funktionseinheit, die mit dem Befestigungshohlelement 1c ausgebildet ist, zeigen Fig. 15 und 16 in Übereinstimmung mit einem vierten Ausführungsbeispiel. Das Befestigungshohlelement 1c unterscheidet sich von dem Befestigungshohlelement 1 zunächst darin, dass die Materialtrenneinrichtung 2 weggelassen ist, so dass auch bei dem vierten Ausführungsbeispiel ein Loch in der Akustikdeckenkomponente 50 vorgeschnitten wird.

Ferner weist das Befestigungshohlelement 1c eine innere umlaufende Wandung 22 auf, die kürzer ist als die Wandung 6 und sich im Wesentlich koaxial und parallel zu dieser erstreckt.

Im Inneren des Befestigungshohlelements 1c ist ein Aufnahmeraum 4 als axial durch das Befestigungshohlelement 1c durchgehender Hohlraum ausgebildet. Bei dem vierten Ausführungsbeispiel ist eine Funktionsbaugruppe 100c, bei der es sich in Fig. 15 und 16 um eine Leuchtbaugruppe handelt, in dem Aufnahmeraum 4 angeordnet und fest mit dem Befestigungshohlelement 2 zu einer Einheit verbaut. Statt einer Leuchtbaugruppe könnte die Funktionsbaugruppe 100c auch bei dem vierten Ausführungsbeispiel alternativ zum Beispiel eine Sensorbaugruppe oder eine Lautsprecherbaugruppe sein.

Bei dem vierten Ausführungsbeispiel ist somit das Befestigungshohlelement 1c als ein Gehäuseelement einer Leuchte, oder stattdessen beispielhaft eines anderen elektrisch betriebenen Moduls wie eines Sensor- oder Lautsprechermoduls, ausgebildet. Die Leuchte oder das Modul wird als Ganzes mit Hilfe des Befestigungshohlelements 1c in eine Akustikdeckenkomponente 50 eingeschraubt.

Fig. 15 zeigt schematisch eine Anordnung 200c mit dem in die Akustikdeckenkomponente 50 eingeschraubten Befestigungshohlelement 1c und der Funktionsbaugruppe 100c in der Art einer direkt, ohne separat einzufügendes "mounting set", montierten Leuchte.

Es versteht sich, dass auch bei dem zweiten und vierten Ausführungsbeispiel das Befestigungshohlelement 1a und 1c jeweils eine Eingriffsgeometrie für ein in den Figuren nicht gezeigtes Eindrehwerkzeug aufweisen kann, um das Einschrauben des Befestigungshohlelements 1a, 1c zu erleichtern. Beispielsweise könnten die Ausnehmungen 21 beim zweiten Ausführungsbeispiel hierzu dienen.

Ferner sei darauf hingewiesen, dass beispielsweise in einer Variante des ersten Ausführungsbeispiels die Materialtrenneinrichtung 2 mit den Zähnen 7 ebenfalls weggelassen werden kann, oder dass in Varianten der zweiten, dritten und vierten Ausführungsbeispiele eine Materialtrenneinrichtung 2 wie bei dem oben erläuterten ersten Ausführungsbeispiel vorgesehen sein kann.

Zudem versteht es sich, dass zum Beispiel bei dem dritten Ausführungsbeispiel, welches ein sichtseitiges Verspachteln mittels der Spachtelmasse 54 vorsieht (im Englischen eine so genannte "trimless"- Ausführung), statt einer rastenden Aufnahme der Funktionsbaugruppe eine Bajonettverbindung, analog dem oben Beschriebenen, vorgesehen sein kann.

Ferner ist auch eine Variante des vierten Ausführungsbeispiels, bei dem die Funktionsbaugruppe 100c und das Befestigungshohlelement 1c bereits als Einheit miteinander verbaut sind, vorstellbar, bei der statt der in den Figuren illustrierten sichtseitigen Gestaltung mit sichtbarem Rand oder "trim" die Rippen-Rillen-Struktur 19 mit dem Vorsprung 19' vorgesehen ist.

Bei den vorstehend beschriebenen Ausführungsbeispielen ist die Akustikdeckenkomponente 50 Teil einer abgehängten Akustik-Zwischendecke. Eine Verkabelung zur Versorgung der Funktionsbaugruppen 100, 100a, 100c erfolgt von der Rückseite der Akustikdecke her.

Bei den vorstehend beschriebenen Ausführungsbeispielen kann beispielhaft ein Außendurchmesser des Befestigungshohlelements 1, 1a, 1b, 1c am Außenrand 17 zwischen etwa 80 mm und etwa 150 mm, beispielsweise zwischen 110 mm und 115 mm betragen. Andere Durchmesser sind jedoch ebenfalls denkbar. Eine axiale Länge des Befestigungshohlelements 1, 1a, 1b, 1c kann bei einigen Varianten zum Beispiel zwischen 35 mm und 55 mm betragen, beispielsweise ca. 45 mm. Andere, zum Beispiel größere Längen von beispielsweise bis zu 100 mm oder mehr sind jedoch gleichfalls vorstellbar und nützlich. Vielerlei Verhältnisse von Durchmesser zu Länge sind denkbar und können nützlich sein.

Wenngleich die vorliegende Erfindung vorstehend anhand bevorzugter Ausführungsbeispiele vollständig beschrieben wurde, ist sie nicht darauf beschränkt, sondern auf vielfältige Art und Weise modifizierbar.

### BEZUGSZEICHENLISTE

- 1, 1a, 1b, 1c: Befestigungshohlelement
- 2: Materialtrenneinrichtung
- 3: Gewindeeinrichtung
- 4: Aufnahmeraum
- 5: stirnseitiger Rand
- 6: Wandung
- 7: Zahn
- 8: Rippe
- 8a: freie Kante
- 9: Drehachse
- 10: Haltenut
- 11: Eingriffsgeometrie
- 12: Rippe
- 13: Ausnehmung
- 14: Außenumfangsflächenbereich
- 15: trichterartig zulaufende Fläche
- 16: Materialdicke
- 17: stirnseitiger Außenrand
- 18: sichtseitige Stirnseite
- 19: stirnseitige Rippen-Rillen-Struktur
- 19': umlaufender Begrenzungsvorsprung
- 20: innere umlaufende Wandung
- 21: abgewinkelte Kopplungsausnehmung
- 22: innere umlaufende Wandung
- 23: kegeliger Endabschnitt
- 50: Komponente
- 51: schallabsorbierendes Material
- 52: Kern
- 53: sichtseitige Oberfläche
- 54: Spachtelmasse
- 60: Eindrehwerkzeug
- 61: Arm
- 62: Eingriffsrippen
- 70: Eindreh- und Einschraubbewegung
- 100, 100a: Funktionsbaugruppe
- 100c: Funktionsbaugruppe
- 110: Kugelschnappereinrichtung
- 120: Vorsprung
- 200: Anordnung
- 200a, 200c: Anordnung
- M: Mittelachse
- S: Sichtseite

## Patentansprüche

1. Befestigungshohlelement (1; 1a; 1b; 1c) zur Befestigung einer elektrisch betriebenen Funktionsbaugruppe (100; 100a; 100c) in einer mit einem schallabsorbierenden Material (51) gebildeten, insbesondere platten- oder paneelartigen, Komponente (50), wobei das Befestigungshohlelement (1; 1a; 1b; 1c) einen Aufnahmeraum (4) zur mindestens abschnittsweisen Aufnahme der Funktionsbaugruppe (100; 100a; 100c) und eine außenseitig an dem Befestigungshohlelement (1; 1a; 1b; 1c) schraubenartig umlaufende Gewindeeinrichtung (3) aufweist, welche dafür angeordnet und ausgebildet ist, sich bei Aufbringen einer Schraubbewegung (70) auf das Befestigungshohlelement (1; 1a; 1b; 1c) in das schallabsorbierende Material (51) einzuarbeiten und durch Wechselwirkung der Gewindeeinrichtung (3) mit dem schallabsorbierenden Material (51) das Befestigungshohlelement (1) und die aufgenommene Funktionsbaugruppe (100; 100a; 100c) an der mit dem schallabsorbierenden Material (51) gebildeten Komponente (50) zu halten.

2. Befestigungshohlelement nach Anspruch 1,
**dadurch gekennzeichnet, dass** die mit dem schallabsorbierenden Material (51) gebildete Komponente (50), in der die Funktionsbaugruppe (100; 100a; 100c) mittels des Befestigungshohlelements (1; 1a; 1b; 1c) befestigbar ist, eine Akustikdeckenkomponente ist.

3. Befestigungshohlelement nach einem der vorstehenden Ansprüche,
**dadurch gekennzeichnet, dass** das Befestigungshohlelement (1; 1b) in dem Aufnahmeraum (4) eine umlaufende Haltenut (10) aufweist oder dass das Befestigungshohlelement (1a) in dem Aufnahmeraum (4) zwei oder mehr entlang einer Umfangsrichtung desselben verteilt angeordnete abgewinkelte Kopplungsausnehmungen (21) aufweist.

4. Befestigungshohlelement nach einem der vorstehenden Ansprüche,
**dadurch gekennzeichnet, dass** das Befestigungshohlelement (1; 1b) eine Eingriffsgeometrie (11) für ein Eindrehwerkzeug (60) zum Aufbringen der Schraubbewegung (70) aufweist; und/oder dass das Befestigungshohlelement (1; 1b) in dem Aufnahmeraum (4) eine umlaufende, unterbrochene Rippe (12) aufweist, die mit in einer Umfangsrichtung des Aufnahmeraums (4) verteilten Ausnehmungen (13) versehen ist, wobei die Ausnehmungen (13) die Rippe (12) unterbrechen und vorzugsweise entlang der Umfangsrichtung des Aufnahmeraums (4) gleichmäßig verteilt angeordnet sind.

5. Befestigungshohlelement nach einem der vorstehenden Ansprüche,
**dadurch gekennzeichnet, dass** die Gewindeeinrichtung (3) mit einer außenseitig an dem Befestigungshohlelement (1; 1a; 1b; 1c) gewindeartig gewunden und durchgehend umlaufenden Rippe (8) ausgebildet ist und insbesondere dass die umlaufende Rippe (8) in einem Querschnitt derselben zu einer freien Kante (8a) der Rippe (8) hin spitz zuläuft.

6. Befestigungshohlelement nach einem der vorstehenden Ansprüche,
**dadurch gekennzeichnet, dass**
das Befestigungshohlelement (1; 1a; 1b; 1c) mit einer im Wesentlichen kreiszylinderförmigen äußeren Grundform ausgebildet ist und/oder dass
das Befestigungshohlelement (1; 1a; 1b; 1c) einstückig ausgebildet ist und/oder dass
das Befestigungshohlelement (1; 1a; 1b; 1c) in einem generativen Fertigungsverfahren, insbesondere mittels 3D-Druck, hergestellt ist und/oder dass
das Befestigungshohlelement (1; 1a; 1b; 1c) aus einem Kunststoffmaterial oder einem Metallmaterial, insbesondere Aluminium oder einer Aluminiumlegierung, hergestellt ist und/oder dass
das Befestigungshohlelement (1; 1a; 1b) zur lösbaren Aufnahme einer Funktionseinheit als der Funktionsbaugruppe (100; 100a) ausgebildet ist oder das Befestigungshohlelement (1c) als ein Gehäuseelement ausgebildet ist und dafür vorgesehen ist, die Funktionsbaugruppe (100c) in dem Aufnahmeraum (4) fest verbaut aufzunehmen.

7. Befestigungshohlelement nach einem der vorstehenden Ansprüche,
**dadurch gekennzeichnet, dass** das Befestigungshohlelement (1) ferner eine Materialtrenneinrichtung (2) aufweist und mittels des Aufbringens der Schraubbewegung (70) unter Bildung eines entfernbaren Kerns (52) des schallabsorbierenden Materials (51) durch Wirkung der Materialtrenneinrichtung (2) in das volle schallabsorbierende Material (51) einfügbar ist; und insbesondere dass die Materialtrenneinrichtung (2) den Aufnahmeraum (4) umgebend angeordnet ist und/oder die Materialtrenneinrichtung (2) an einem stirnseitigen Rand (5) einer umlaufenden Wandung (6) des Befestigungshohlelements (1) angeordnet ist.

8. Befestigungshohlelement nach Anspruch 7,
**dadurch gekennzeichnet, dass** die Materialtrenneinrichtung (2) eine umlaufende Anordnung von Zähnen (7), insbesondere Sägezähnen, aufweist; und insbesondere dass die Zähne (7) radial außenseitig einen im Wesentlichen zylindrischen Außenumfangsflächenbereich (14) des Befestigungshohlelements (1) abschnittsweise fortsetzen und radial innenseitig abschnittsweise Bereiche einer trichterartig zulaufenden Fläche (15) bilden, derart, dass die Zähne (7) jeweils an einem Zahnfuß derselben im Wesentlichen eine Außenwanddicke (16) des Befestigungshohlelements (1) erreichen.

9. Befestigungshohlelement nach Anspruch 7 oder 8,
**dadurch gekennzeichnet, dass** die Materialtrenneinrichtung (2) und die Gewindeeinrichtung (3) entlang einer Drehachse (9), durch Drehen um welche das Befestigungshohlelement (1) in das volle schallabsorbierende Material (51) einschraubbar ist, voneinander beabstandet an dem Befestigungshohlelement (1) vorgesehen sind.

10. Befestigungshohlelement nach einem der vorstehenden Ansprüche,
**dadurch gekennzeichnet, dass** das Befestigungshohlelement (1; 1a; 1c) mit einem in eine sichtseitige Oberfläche (53) der mit dem schallabsorbierenden Material (51) ausgebildeten Komponente (50) versenkbaren, kegeligen Endabschnitt (23) ausgebildet ist und/oder dass das Befestigungshohlelement (1b) an einer sichtseitigen Stirnseite (18) desselben glatt ausgebildet ist oder eine sichtseitige Rippen-Rillen-Struktur (19) aufweist.

11. Satz umfassend mindestens ein Befestigungshohlelement (1; 1a; 1b; 1c) gemäß einem der Ansprüche 1 bis 10 und ein Eindrehwerkzeug (60) zum Einfügen des Befestigungshohlelements (1; 1a; 1b) oder des Befestigungshohlelements (1c) mit einer fest mit diesem verbauten Funktionsbaugruppe (100c) in eine mit einem schallabsorbierenden Material (51) gebildete, insbesondere platten- oder paneelartige, Komponente (50).

12. Satz nach Anspruch 11,
**dadurch gekennzeichnet, dass** das Eindrehwerkzeug (60) mit Armen (61) ausgebildet ist, die derart angeordnet sind, dass die Arme (61) bei einer Verwendung des Eindrehwerkzeugs (60) zum Einfügen des Befestigungshohlelements (1; 1a; 1b) oder des Befestigungshohlelements (1c) mit der fest verbauten Funktionsbaugruppe (100c) mittels einer Schraubbewegung (70) sichtseitig an dem Befestigungshohlelement (1; 1a; 1b; 1c) anstehen und über einen sichtseitigen Außenrand (17) des Befestigungshohlelements (1; 1a; 1b; 1c) außenseitig überstehen.

13. Anordnung (200; 200a; 200c) mit einer mit einem schallabsorbierenden Material (51) gebildeten, insbesondere platten- oder paneelartigen, Komponente (50), insbesondere einer Akustikdeckenkomponente, einem in die Komponente (50) eingefügten Befestigungshohlelement (1; 1a; 1b; 1c) gemäß einem der Ansprüche 1 bis 10 und einer in dem Befestigungshohlelement (1; 1a; 1b; 1c) aufgenommenen, elektrisch betriebenen Funktionsbaugruppe (100; 100a; 100c).

14. Anordnung nach Anspruch 13,
**dadurch gekennzeichnet, dass** die Funktionsbaugruppe (100; 100a; 100c) als eine Beleuchtungsbaugruppe ausgebildet ist oder dass die Funktionsbaugruppe (100) als eine Sensorbaugruppe oder als eine Lautsprecherbaugruppe ausgebildet ist.

15. Anordnung nach Anspruch 13 oder 14,
**dadurch gekennzeichnet, dass** die Funktionsbaugruppe (100; 100a) als eine lösbar in dem Befestigungshohlelement (1; 1a; 1b) aufgenommene Funktionseinheit (100; 100a) ausgebildet ist oder dass die Funktionsbaugruppe (100c) fest mit dem Befestigungshohlelement (1c) als Gehäuseelement verbaut ist; und insbesondere dass die Funktionseinheit (100; 100a) mittels an der Funktionseinheit (100) außenseitig angeordneter Kugelschnappereinrichtungen (110) in dem Befestigungshohlelement (1; 1b) rastend gehalten ist oder die Funktionseinheit (100a) bajonettartig mit dem Befestigungshohlelement (1a) gekoppelt ist.

16. Anordnung nach einem der Ansprüche 13 bis 15,
**dadurch gekennzeichnet, dass** das schallabsorbierende Material (51) mit einem faserigen oder porösen Material ausgebildet ist und/oder dass das schallabsorbierende Material (51) eine geringere Härte aufweist als ein Material der Gewindeeinrichtung (3) des Befestigungshohlelements (1; 1a; 1b; 1c).
